(19) Europäisches Patentamt
European Patent Office
Office européen des brevets

(11) **EP 3 634 139 B1**

(12) **EUROPEAN PATENT SPECIFICATION**

(45) Date of publication and mention
of the grant of the patent:
**16.09.2020 Bulletin 2020/38**

(51) Int Cl.:
*A23L 7/196* (2016.01)    *A23D 7/01* (2006.01)
*A23D 9/007* (2006.01)    *A23L 7/10* (2016.01)
*A23D 7/005* (2006.01)    *A23D 9/013* (2006.01)

(21) Application number: **18723557.7**

(22) Date of filing: **17.05.2018**

(86) International application number:
**PCT/EP2018/062923**

(87) International publication number:
**WO 2018/224281 (13.12.2018 Gazette 2018/50)**

(54) **COOKING AID COMPOSITION FOR FRYING RICE**

KOCHHILFSZUSAMMENSETZUNG ZUM BRATEN VON REIS

COMPOSITION D'AIDE À LA CUISSON POUR LA FRITURE DU RIZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2017 EP 17174802**

(43) Date of publication of application:
**15.04.2020 Bulletin 2020/16**

(73) Proprietors:
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC**
**London, Greater London EC4Y 0DY (GB)**
Designated Contracting States:
**CY GB IE MT**

(72) Inventors:
• **JONAS, Volker**
**74074 Heilbronn (DE)**
• **THAKUR, Shweta**
**Bangalore 560 066 (IN)**
• **SKIBA, Tomasz**
**74074 Heilbronn (DE)**
• **STEPHAN-HOFMANN, Iris**
**74074 Heilbronn (DE)**

(74) Representative: **van den Brom, Coenraad Richard**
**Unilever Patent Group**
**Bronland 14**
**6708 WH Wageningen (NL)**

(56) References cited:
WO-A1-2016/012263    FR-A1- 2 288 478
GB-A- 1 081 567    JP-A- 2001 204 407
JP-A- 2016 167 999    US-A1- 2009 274 815

• **REKHA BASAVALINGAPPA ET AL: "Chemistry
of Color Fixation in Crude, Physically Refined and
Chemically Refined Rice Bran Oils upon
Heating", JOURNAL OF THE AMERICAN OIL
CHEMISTS' SOCIETY (JAOCS), SPRINGER, DE,
vol. 91, no. 10, 15 August 2014 (2014-08-15), pages
1665-1676, XP035396022, ISSN: 0003-021X, DOI:
10.1007/S11746-014-2520-4 [retrieved on
2014-08-15]**

**Description**

**Field of the invention**

The present invention relates to a cooking aid composition for the preparation of fried rice. More in particular, to a cooking aid composition comprising rice flour and partial glycerides, wherein the partial glycerides are selected from monoglyceride, diglyceride and combinations thereof. The present invention further relates to a method of preparing the cooking aid composition and to the use of said composition for preparing fried rice.

**Background of the invention**

Rice is a daily dietary staple food for more than half of the world's population, and the major single food source of carbohydrate and energy in many Asian countries.

Rice is the seed of the grass species *Oryza sativa* (Asian rice) or *Oryza glaberrima* (African rice). The *Oryza sativa* is more commonly used. *Oryza sativa* contains two major subspecies: the glutinous (sticky or waxy), short-grained *japonica* or *sinica* variety, and the non-glutinous (non-sticky), long-grained *indica* variety.

Glutinous rice is distinguished from other types of rice by having a different starch composition. The starch in glutinous rice is low in amylose, and comprises high amounts of amylopectin.

Rice flour (also called rice powder) is a form of flour made from finely milled rice. To make the flour, the husk of rice or paddy is typically removed from the rice kernels, and subsequently the rice kernels are ground to flour. Depending on the type of rice (glutinous or non-glutinous) used, the obtained rice flour may have different properties. For example, when a rice flour is prepared from cooked glutinous rice kernels a sweet rice flour is obtained that is typically used as a thickening agent.

Fried rice is a dish of cooked rice that has been stir fried, usually mixed with other ingredients, such as eggs, vegetables, and meat. As a homemade dish, fried rice is typically made from leftover cooked rice and other ingredients (including vegetables and/or meat) from other dishes, leading to countless variations.

One of the problems encountered in the preparation of fried rice is the sticking of the rice kernels to the hot surface of the frying pan (or "wok"), leading to burnt rice and/or rice clumps.

Cooking aid compositions for improving the properties of fried rice, which can be added during the preparation of fried rice, have been described in the prior art.

JP 2008/148597 describes a cooking material for fried rice. The use of the cooking material allows the ingredients to be evenly dispersed in the cooked rice, and to render the cooked rice non-sticky and loose during preparation of fried rice with additional flavours. The cooking material for the fried rice is obtained by separately packaging a dry ingredient part and a liquid seasoning part, wherein the dry ingredient part comprises at least one dry component and an emulsifier mixed with powdered oil and fat, and the liquid seasoning part comprises oil and fat seasoning and liquid seasoning.

JP 2001/204407 describes an improver for processing cooked rice, which is capable of improving the loosening properties of the cooked rice grain and providing the processed cooked rice with light palatability, preferable flavour and lustre without impairing flavour of the cooked rice. The improver for processing cooked rice contains oils and fats, watersoluble hemicellulose and an emulsifying agent.

JP 2015/228844 describes a production method of preparing fried rice, comprising adding a fat composition including 0.3-7 mass% of emulsifier and 0.1-5 mass% of lecithin and 4.5-10 of HLB to cooked rice, and heating the cooked rice to which the fat composition is added.

WO 2016/012263 describes a shelf-stable cooking aid for coating and frying a food product, the cooking aid comprising 25-40 wt% oil, 35-65 wt% water, 10-25 wt% flour and/or starch, an emulsifier; and wherein the oil and water are in the form of an emulsion.

The cooking aid compositions for improving the properties of fried rice, in the state of the art have in common that they apply triglycerides in combination with emulsifiers, such as lecithin. A drawback of such compositions is that these compositions negatively affect the taste of the obtained fried rice.

**Summary of the invention**

There is a clear consumer need to obtain fried rice with improved fluffiness (*i.e.* rice which does not stick to the pan and does not form clumps), while maintaining a satisfactory taste and structure of the cooked (boiled or steamed) and fried rice kernel.

The inventors of the present invention have surprisingly found that a combination of rice flour and mono- and/or diglycerides imparts an improved fluffiness to the fried rice. Non-sticky, fluffy fried rice is thus obtained by adding the combination of rice flour and mono- and/or diglycerides to the cooked rice during the frying thereof.

Accordingly, the present invention relates to a cooking aid composition for the preparation of fried rice, said composition comprising by weight of dry matter:

i. 25-55 wt.% of rice flour;
ii. 45-75 wt.% of partial glycerides selected from monoglyceride, diglyceride and combinations thereof.

Neither the rice flour alone, nor the partial glycerides alone, gives satisfactory results when used as a cooking aid composition in the preparation of fried rice.

When cooked rice is fried in partial glycerides and/or triglycerides alone, the fried rice kernels tend to taste greasy and to "puff" (as popcorn) during frying, which changes the structure of the fried rice kernel. On the other hand, frying the cooked rice only in rice flour turns the cooked rice into dry, hard rice kernels.

It is therefore the combination of rice flour and partial glycerides that leads to the desired improvement of the fried rice.

The present invention further relates to a method of preparing the cooking aid composition and to the use of the cooking aid composition for preparing fried rice, said use comprising combining 0.5-5 parts by weight of the composition per 100 parts by weight of cooked rice.

## Detailed description of the invention

A first aspect of the present invention relates to a cooking aid composition for the preparation of fried rice, said composition comprising by weight of dry matter:

i. 25-55 wt.% of rice flour;
ii. 45-75 wt.% of partial glycerides selected from monoglyceride, diglyceride and combinations thereof.

The word 'comprising' as used herein is intended to mean 'including' but not necessarily 'consisting of' or 'composed of'. In other words, the listed steps or options need not be exhaustive.

Unless indicated otherwise, weight percentages (wt.%) are based on the total weight of the cooking aid composition.

The water content of the cooking aid composition refers to the total water content, thus including the water that is present within the ingredients of the cooking aid composition.

The term "gelatinized starch" as used herein refers to starch that has undergone gelatinization. Starch gelatinization is a process that breaks down the intermolecular bonds of starch molecules in the presence of water and heat, allowing the hydrogen bonding sites to engage more water. Penetration of water increases randomness in the general starch granule structure and decreases the number and size of crystalline regions. Under the microscope in polarized light starch loses its birefringence and its extinction cross during gelatinization. Some types of unmodified native starches start swelling at 55 °C, other types at 85 °C. The gelatinization temperature depends on the degree of cross-linking of the amylopectin.

The particle size distribution of the cooking aid composition can suitably be determined by means of sieving, i.e. by employing a set of sieves of different mesh sizes.

The term "fluffiness of rice" as used herein can suitably be described as fried rice which does not stick to the pan during frying and does not form clumps. Fluffiness can be suitably quantified by measuring the rheological stirring resistance using an Anton Paar rheometer with a Ball Measuring System, as further detailed in example 3 herein below.

The term "rice flour" as used herein refers to a particulate composition obtained by conventional grinding of rice kernels and optionally sieving the particulate composition to obtain a desired particle size range.

The term "partial glycerides" as used herein refers to monoglycerides and/or diglycerides of fatty acids.

Monoglycerides and diglycerides of fatty acids are both naturally present in various seed oils. However, their concentration in these oils is usually low. Industrial production of monoglycerides and diglycerides is primarily achieved by a glycerolysis reaction between triglycerides and glycerol.

In the cooking aid composition, the weight ratio of the partial glycerides to the rice flour is preferably at least 1:1, more preferably at least 1.2:1, even more preferably the weight ratio is within the range of 1.4:1 to 2.6:1 and most preferably the weight ratio is within the range of 1:6 to 2.3:1.

The cooking aid composition preferably comprises 26-50 wt.% of rice flour, more preferably 28-45 wt.% of rice flour, most preferably 30-40 wt.% of rice flour, by weight of dry matter.

The rice flour typically comprises at least 60 wt.% of starch by dry weight of the rice flour. Preferably, the rice flour comprises 65-95 wt.% of starch by dry weight of the rice flour, more preferably the rice flour comprises 70-90 wt.% of starch by dry weight of the rice flour.

According to a preferred embodiment of the invention, the weight ratio of amylopectin to amylose in the starch of the rice flour is not more than 95:5, preferably not more than 90:10 and most preferably not more than 85:15.

Preferably, the starch in the rice flour is not gelatinized.

The cooking aid composition preferably comprises 50-74 wt.% of partial glycerides, more preferably 55-72 wt.% of partial glycerides, most preferably 60-70 wt.% of partial glycerides, by weight of dry matter.

Preferably, the monoglyceride is a glycerol moiety esterified to a single $C_8$-$C_{22}$ fatty acid residue. More preferably, the monoglyceride is a glycerol moiety esterified to a single C12-C20 fatty acid residue.

Preferably, the monoglyceride comprises at least 80 wt.% of saturated fatty acids residues, based on the total weight of the monoglyceride. More preferably, the monoglyceride comprises at least 85 wt.%, most preferably 90-98 wt.% of saturated fatty acids residues, based on the total weight of the monoglyceride.

Preferably, the diglyceride is a glycerol moiety esterified to two $C_8$-$C_{22}$ fatty acid residues. More preferably, the diglyceride is a glycerol moiety esterified to two $C_{12}$-$C_{20}$ fatty acid residues.

Preferably, the diglyceride comprises at least 80 wt.% of saturated fatty acids residues, based on the total weight of the diglyceride. More preferably, the diglyceride comprises at least 85 wt.%, most preferably 90-98 wt.% of saturated fatty acids residues, based on the total weight of the diglyceride.

The partial glycerides preferably comprise a combination of monoglycerides and diglycerides. More preferably, the monoglycerides and diglycerides are present in a weight ratio within the range of 2:1 to 40:1. Most preferably, the monoglycerides and diglycerides are present in a weight ratio within the range of 4:1 to 20:1.

Preferably, the cooking aid composition is a particulate composition. Said particulate composition is preferably composed of particles having a mass weighted average diameter of less than 2000 microns, more preferably of less than 1750 microns, and most preferably in the range of 50 to 1500 microns.

In a preferred embodiment, the combination of the rice flour and the partial glycerides constitutes at least 74 wt.% by dry weight of the cooking aid composition, more preferably at least 78 wt.%, most preferably at least 82 wt.% by dry weight of the cooking aid composition.

Besides the rice flour and the partial glycerides, the cooking aid composition, optionally comprises additional ingredients. Preferably, the additional ingredients are selected from inorganic salt, particulate plant material, dairy protein, triglycerides, water and combinations thereof.

The cooking aid composition preferably comprises not more than 30 wt.% of inorganic salt, by weight of dry matter. More preferably, the cooking aid composition comprises 2-25 wt.%, most preferably 4-20 wt.% of inorganic salt, by weight of dry matter.

The inorganic salt is preferably selected from sodium chloride, potassium chloride and combinations thereof. More preferably, the inorganic salt is sodium chloride.

The cooking aid composition preferably comprises not more than 30 wt.% of particulate plant material, by weight of dry matter. More preferably, the cooking aid composition comprises 4-25 wt.%, most preferably 8-20 wt.% of particulate plant material, by weight of dry matter.

The particulate plant material is preferably selected from spices, herbs, vegetables, fruits and combinations thereof.

The cooking aid composition preferably comprises not more than 30 wt.% of dairy protein, by weight of dry matter. More preferably, the cooking aid composition comprises 1-25 wt.%, most preferably 2-15 wt.% of dairy protein, by weight of dry matter.

The dairy protein preferably comprises at least 40 wt.% of whey protein, by weight of dry matter. More preferably the dairy protein comprises at least 60 wt.%, most preferably at least 80 wt.% of whey protein, by weight of dry matter.

Preferably, the cooking aid composition comprises not more than 10 wt.% of triglycerides by weight of dry matter. More preferably, the cooking aid composition comprises not more than 5 wt.% of triglycerides, even more preferably not more than 2 wt.% of triglycerides, by weight of dry matter. Most preferably, the composition comprises no triglycerides.

The triglycerides employed in the cooking aid composition preferably comprise at least 50 wt.% of vegetable oils, more preferably at least 65 wt.% of vegetable oils, even more preferably at least 80 wt.% of vegetable oils and most preferably the triglycerides in the cooking aid composition are vegetable oils.

Examples of vegetable oils that may be employed include sunflower oil, soybean oil, rapeseed oil, cottonseed oil, maize oil, olive oil, palm oil, palm kernel oil, coconut oil, fractions of these oils and combinations thereof.

Preferably, the cooking aid composition comprises not more than 1 wt.% of lecithin, by weight of dry matter. More preferably, the composition comprises not more than 0.5 wt.% of lecithin, by weight of dry matter. Most preferably, the composition does not comprise lecithin.

The cooking aid composition preferably comprises not more than 10 wt.% of water, more preferably not more than 7 wt.% of water, and most preferably not more than 5 wt.% of water.

In a preferred embodiment of the invention, the composition comprises:

    i. 25-55 wt.% of rice flour;
    ii. 45-75 wt.% of partial glycerides selected from monoglyceride, diglyceride and combinations thereof;

iii. 0-30 wt.% of inorganic salt;
iv. 0-30 wt.% of particulate plant material selected from spices, herbs, vegetables, fruits and combinations thereof;
v. 0-30 wt.% of dairy protein;
vi. 0-10 wt.% of triglycerides; and
vii. 0-10 wt.% of water.

A second aspect of the invention relates to a method for preparing the cooking aid composition of the invention. The method comprises dry mixing the rice flour with the partial glycerides. Optionally, the partial glycerides and the rice flour are mixed with additional ingredients.

The mixing is preferably carried out at a temperature that lies in the range of 15-30 °C, more preferably at a temperature that lies in the range of 20-25 °C.

A third aspect of the invention relates to a use of the cooking aid composition for preparing fried rice, said use comprising combining 0.5-5 parts by weight of the cooking aid composition per 100 parts by weight of cooked rice. Preferably, the use comprises combining 1-4 parts by weight of the composition per 100 parts by weight of cooked rice.

Preferably, the use comprises stir frying the combination of the cooking aid composition and the cooked rice.

The cooked rice may be prepared by any conventional cooking method. Preferably, the cooked rice is prepared by steaming or boiling.

The cooked rice preferably comprises at least 50 wt.% of water, more preferably at least 60 wt.% of water, and most preferably 65-70 wt.% of water.

The invention is further illustrated by the following non-limiting examples.

## Examples

### Example 1

*Cooking aid compositions*

Compositions A-D and 1 were used as cooking aid compositions during the preparation of fried rice. The recipes of these cooking aid compositions are provided in Table 1. The cooking aid composition were dosed at 3 grams per 100 grams of cooked rice.

Table 1

| Cooking aid composition | Ingredients |
|---|---|
| A | Rice flour [1] |
| B | Rice starch |
| C | Rice flour [1] + rice starch (1:1) |
| D | Rice flour [1] + potato starch (1:1) |
| 1 | Rice flour [1] + mono- and diglycerides [2] (1:1) |
| [1] The rice flour was prepared by drying and milling of peeled rice kernels of *Oryza sativa* <br> [2] The mono- and diglycerides were produced by transesterification of hydrogenated palm oil with glycerol | |

*Cooked rice preparation*

- Raw rice was washed thoroughly with running water.
- In a pan, water was added to the raw rice to obtain a weight ratio of water to rice of about 1.75:1.
- The pan was placed in a pre-heated oven at 90 °C for 16 minutes.
- The cooked rice was stored for 24 hours in a refrigerator at 7-8 °C.

*Fried rice preparation*

- A stir fry pan was heated with medium flame.
- Two tablespoons of oil were added in the pan.
- 200 grams of cooked rice was added in the pan and 3 grams of cooking aid composition was added on top of the rice.
- The cooked rice and cooking aid composition were mixed well and stir fried for approx. 2 min or till the rice grains were separate.
- The fried rice was transferred to a bowl.

The obtained fried rice preparations were assessed by a panel. The fluffiness of the rice kernels and the obtained taste were scored using a scale from 1 to 5, wherein 5 stands for an optimal result. The results are summarized in Table 2.

Table 2

| Cooking aid composition | Fluffiness | Clumps of rice | Taste |
|---|---|---|---|
| A | 3 | No | 2 |
| B | 1 | Yes | 2 |
| C | 1 | Yes | 3 |
| D | 1 | Yes | 3 |
| 1 | 5 | No | 4 |

These results show that the combination of rice flour and partial glycerides provides improved fluffiness to the fried rice, with complete absence of rice clumps and also provides an optimal taste to the fried rice preparation.

**Example 2**

*Cooking aid compositions*

Compositions E-G and 2 were used as cooking aid compositions during the preparation of fried rice. The recipes of these cooking aid compositions are provided in Table 3. The dosage (grams) of cooking aid composition per 100 grams of cooked rice are also summarized in Table 3.

Table 3

| Cooking aid composition | Ingredients | Amount (g) per 100 g cooked rice |
|---|---|---|
| E | Soybean lecithin | 0.3 |
| F | Mono- and diglycerides[1] | 0.5 |
| G | Rice flour [2] + soybean lecithin (5:1) | 1.8 |
| 2 | Rice flour [2] + mono- and diglycerides [1] (1:2) | 1.5 |
| [1] The mono- and diglycerides were produced by transesterification of hydrogenated palm oil with glycerol [2] The rice flour was prepared by drying and milling of peeled rice kernels of *Oryza sativa* | | |

*Fried rice preparation*

Cooked rice was prepared as described in Example 1. The cooked rice was stir fried as described in Example 1.
The obtained fried rice preparations were assessed by a panel. The fluffiness of the rice kernels and the obtained taste were scored using a scale from 1 to 5, wherein 5 stands for an optimal result. The results are summarized in Table 2.

Table 4

| Cooking aid composition | Fluffiness | Clumps of rice | Taste |
|---|---|---|---|
| E | 2 | No | 1 [A] |
| F | 3 | No | 3 |
| G | 2 | No | 1 [A] |

(continued)

| Cooking aid composition | Fluffiness | Clumps of rice | Taste |
|---|---|---|---|
| 2 | 5 | No | 5 |

A The fried rice preparation had an off-taste due to the lecithin

## Example 3

*Sample preparation*

Fried rice samples according to the invention were prepared by stir frying 250g of cooked rice (prepared as described in Example 1) in an oil coated (7.5 g oil), pre-heated cast iron pan. Subsequently, 3.75 g of the cooking aid composition 2, as described herein before in Example 2, was added to the cooked rice. This mixture was stir fried for approximately 4 minutes.

Comparative fried rice samples were prepared in a similar manner, except that instead of using cooking aid composition 2, 1.25 g of salt was added to the rice as cooking aid composition H.

*Rheological assessment*

The fluffiness of the prepared fried rice samples was quantified by measuring the rheological stirring resistance (Pa.s) in the fried rice samples directly after stir frying, at a constant shear rate ("CSR") and a controlled temperature. The lower the value of the rheological stirring resistance, the better the corresponding fluffiness of the fried rice sample.

The following specifications were applied:

| | |
|---|---|
| Rheometer | Anton Paar MCR 102 |
| Ball Measuring System | BMS (BM08/70,5 D:8mm) |
| Measuring probe | BM08/Q1-SN16947; d=0 mm |
| Temperature control | TEKM90-C-modul |
| Shear rate | 0.5 s⁻¹ |
| Temperature | 60 ± 5 °C |

Directly after the stir frying, the fried rice samples were transferred to a BMS stainless steel cup, which was filled with about 200-220 g of fried rice sample, up to 1 cm below the edge of the cup. The temperature of the fried rice was adjusted to 60 ± 5°C prior to the start of the measurement and was maintained at this temperature range during the measurement.

The shear stress was measured eight times per run. Each measurement encompassed a measurement period of 6 seconds. The average viscosity per run is calculated from these eight measurement points.

The viscosity η (in Pa.s) is calculated by dividing the shear stress (T) by shear rate (γ):

$$\eta = \frac{\tau}{\dot{\gamma}}$$

In total, 16 runs were measured with for each run a newly prepared fried rice sample. The 16 runs were performed in 4 sets of 4 runs. For each set 1 kg of cooked rice was prepared the day before and on the day of stir frying 250 gram of cooked rice was stir fried per run. The samples were prepared on different days to assess the day-to-day variations in the cooking of rice and the stir frying of the rice.

The average viscosity per set are given in Table 5:

Table 5

| Cooking aid composition | Average viscosity ± SD (Pa.s) | | | |
|---|---|---|---|---|
| | Set 1 | Set 2 | Set 3 | Set 4 |
| 2 | 242 ± 22 | 286 ± 12 | 386 ± 26 | 369 ± 15 |
| H | 486 ± 25 | 455 ± 16 | 610 ± 74 | 607 ± 21 |

**Claims**

1. A cooking aid composition for the preparation of fried rice, said composition comprising by weight of dry matter:

   i. 25-55 wt.% of rice flour;
   ii. 45-75 wt.% of partial glycerides selected from monoglyceride, diglyceride and combinations thereof.

2. Cooking aid composition according to claim 1, wherein the weight ratio of the partial glycerides to the rice flour in the composition is at least 1:1.

3. Cooking aid composition according to claim 1 or 2, wherein the composition comprises 26-50 wt.% of rice flour, by weight of dry matter.

4. Cooking aid composition according to any one of the proceeding claims, wherein the composition comprises 50-74 wt.% of partial glycerides, by weight of dry matter.

5. Cooking aid composition according to any one of the proceeding claims, wherein the partial glycerides comprise monoglycerides and diglycerides in a weight ratio that is within the range of 2:1 to 40:1.

6. Cooking aid composition according to any one of the proceeding claims, wherein the composition comprises not more than 10 wt.% of water.

7. Cooking aid composition according to any one of the proceeding claims, wherein the composition comprises not more than 10 wt.% of triglycerides.

8. Cooking aid composition according to any one of the proceeding claims, wherein the combination of the rice flour and the partial glycerides constitutes at least 74 wt.% by dry weight of the composition.

9. Cooking aid composition according to any one of the proceeding claims, wherein the composition is a particulate composition.

10. Cooking aid composition according to claim 9, wherein the particulate composition is composed of particles having a mass weighted average diameter of less than 2000 microns.

11. Cooking aid composition according to any one of the proceeding claims, wherein the composition comprises by weight of dry matter:

    i. 25-55 wt.% of rice flour;
    ii. 45-75 wt.% of partial glycerides selected from monoglyceride, diglyceride and combinations thereof;
    iii. 0-30 wt.% of inorganic salt;
    iv. 0-30 wt.% of particulate plant material selected from spices, herbs, vegetables, fruits and combinations thereof;
    v. 0-30 wt.% of dairy protein;
    vi. 0-10 wt.% of triglycerides; and
    vii. 0-10 wt.% of water.

12. A method for preparing the cooking aid composition according to any one of the proceeding claims, said method comprising dry mixing the rice flour and the partial glycerides.

13. Use of the cooking aid composition according to any one of claims 1-11 for preparing fried rice, said use comprising combining 0.5-5 parts by weight of the composition per 100 parts by weight of cooked rice.

14. Use according to claim 13, wherein the use comprises stir frying of the combination of the cooking aid composition and cooked rice.

15. Use according to claims 13 or 14, wherein the cooked rice comprises at least 50 wt.% of water.

**Patentansprüche**

1. Kochhilfezusammensetzung zur Zubereitung von gebratenem Reis, wobei die Zusammensetzung, bezogen auf das Gewicht der Trockenmasse, umfasst:

   i. 25-55 Gew.-% Reismehl;
   ii. 45-75 Gew.-% partielle Glyceride, ausgewählt aus Monoglycerid, Diglycerid und Kombinationen davon.

2. Kochhilfezusammensetzung nach Anspruch 1, wobei das Gewichtsverhältnis der partiellen Glyceride zum Reismehl in der Zusammensetzung mindestens 1:1 beträgt.

3. Kochhilfezusammensetzung nach Anspruch 1 oder 2, wobei die Zusammensetzung 26-50 Gew.-% Reismehl, bezogen auf das Gewicht der Trockenmasse, umfasst.

4. Kochhilfezusammensetzung nach irgendeinem der vorhergehenden Ansprüche, wobei die Zusammensetzung 50-74 Gew.-% partielle Glyceride, bezogen auf das Gewicht der Trockenmasse, umfasst.

5. Kochhilfezusammensetzung nach irgendeinem der vorhergehenden Ansprüche, wobei die partiellen Glyceride Monoglyceride und Diglyceride in einem Gewichtsverhältnis umfassen, das im Bereich von 2:1 bis 40:1 liegt.

6. Kochhilfezusammensetzung nach irgendeinem der vorhergehenden Ansprüche, wobei die Zusammensetzung nicht mehr als 10 Gew.-% Wasser umfasst.

7. Kochhilfezusammensetzung nach irgendeinem der vorhergehenden Ansprüche, wobei die Zusammensetzung nicht mehr als 10 Gew.-% Triglyceride umfasst.

8. Kochhilfezusammensetzung nach irgendeinem der vorhergehenden Ansprüche, wobei die Kombination von dem Reismehl und den partiellen Glyceriden mindestens 74 Gew.-% des Trockengewichts der Zusammensetzung ausmacht.

9. Kochhilfezusammensetzung nach irgendeinem der vorhergehenden Ansprüche, wobei die Zusammensetzung eine teilchenförmige Zusammensetzung ist.

10. Kochhilfezusammensetzung nach Anspruch 9, wobei die teilchenförmige Zusammensetzung aus Partikeln mit einem massengewichteten durchschnittlichen Durchmesser von weniger als 2000 Mikron zusammengesetzt ist.

11. Kochhilfezusammensetzung nach irgendeinem der vorhergehenden Ansprüche, wobei die Zusammensetzung, bezogen auf das Gewicht der Trockenmasse, umfasst:

    i. 25-55 Gew.-% Reismehl;
    ii. 45-75 Gew.-% partielle Glyceride, ausgewählt aus Monoglycerid, Diglycerid und Kombinationen davon;
    iii. 0-30 Gew.-% anorganisches Salz;
    iv. 0-30 Gew.-% teilchenförmiges Pflanzenmaterial, ausgewählt aus Gewürzen, Kräutern, Gemüse, Früchten und Kombinationen davon;
    v. 0-30 Gew.-% Milchprotein;
    vi. 0-10 Gew.-% Triglyceride; und
    vii. 0-10 Gew.-% Wasser.

12. Verfahren zur Herstellung der Kochhilfezusammensetzung nach irgendeinem der vorhergehenden Ansprüche, wobei das Verfahren das Trockenmischen von dem Reismehl und den partiellen Glyceriden umfasst.

13. Verwendung der Kochhilfezusammensetzung nach irgendeinem der Ansprüche 1-11 zur Zubereitung von gebratenem Reis, wobei die Verwendung das Kombinieren von 0,5-5 Gewichtsteilen der Zusammensetzung pro 100 Gewichtsteilen gekochtem Reis umfasst.

14. Verwendung nach Anspruch 13, wobei die Verwendung das kurze Anbraten der Kombination der Kochhilfezusammensetzung und des gekochten Reises umfasst.

15. Verwendung nach den Ansprüchen 13 oder 14, wobei der gekochte Reis mindestens 50 Gew.-% Wasser enthält.

## Revendications

1. Composition d'aide à la cuisson pour la préparation de riz frit, ladite composition comprenant en masse de matière sèche :

    i. 25-55 % en masse de farine de riz ;
    ii. 45-75 % en masse de glycérides partiels choisis parmi un monoglycéride, diglycéride et des combinaisons de ceux-ci.

2. Composition d'aide à la cuisson selon la revendication 1, dans laquelle le rapport massique des glycérides partiels à la farine de riz dans la composition est d'au moins 1:1.

3. Composition d'aide à la cuisson selon la revendication 1 ou 2, dans laquelle la composition comprend 26-50 % en masse de farine de riz, en masse de matière sèche.

4. Composition d'aide à la cuisson selon l'une quelconque des revendications précédentes, dans laquelle la composition comprend 50-74 % en masse de glycérides partiels, en masse de matière sèche.

5. Composition d'aide à la cuisson selon l'une quelconque des revendications précédentes, dans laquelle les glycérides partiels comprennent des monoglycérides et diglycérides dans un rapport de masse qui se trouve dans l'intervalle de 2:1 à 40:1.

6. Composition d'aide à la cuisson selon l'une quelconque des revendications précédentes, dans laquelle la composition comprend au plus 10 % en masse d'eau.

7. Composition d'aide à la cuisson selon l'une quelconque des revendications précédentes, dans laquelle la composition comprend au plus 10 % en masse de triglycérides.

8. Composition d'aide à la cuisson selon l'une quelconque des revendications précédentes, dans laquelle la combinaison de la farine de riz et des glycérides partiels constitue au moins 74 % en masse par masse sèche de la composition.

9. Composition d'aide à la cuisson selon l'une quelconque des revendications précédentes, dans laquelle la composition est une composition particulaire.

10. Composition d'aide à la cuisson selon la revendication 9, dans laquelle la composition particulaire est constituée de particules ayant un diamètre moyen moyenné en masse inférieur à 2 000 microns.

11. Composition d'aide à la cuisson selon l'une quelconque des revendications précédentes, dans laquelle la composition comprend en masse de matière sèche :

    i. 25-55 % en masse de farine de riz ;
    ii. 45-75 % en masse de glycérides partiels choisis parmi un monoglycéride, diglycéride et des combinaisons de ceux-ci ;
    iii. 0-30 % en masse de sel inorganique ;
    iv. 0-30 % en masse de matériau de plante particulaire choisi parmi des épices, herbes, légumes, fruits et combinaisons de ceux-ci ;
v. 0-30 % en masse de protéine laitière ;
vi. 0-10 % en masse de triglycérides ; et
vii. 0-10 % en masse d'eau.

12. Procédé de préparation de la composition d'aide à la cuisson selon l'une quelconque des revendications précédentes, ledit procédé comprenant le mélange sec de la farine de riz et des glycérides partiels.

13. Utilisation de la composition d'aide à la cuisson selon l'une quelconque des revendications 1-11 pour la préparation de riz frit, ladite utilisation comprenant la combinaison de 0,5-5 parties en masse de la composition pour 100 parties en masse de riz cuit.

14. Utilisation selon la revendication 13, dans laquelle l'utilisation comprend une cuisson au wok de la combinaison des compositions d'aide à la cuisson et riz cuit.

15. Utilisation selon la revendication 13 ou 14, dans laquelle le riz cuit comprend au moins 50 % en masse d'eau.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008148597 A
- JP 2001204407 A
- JP 2015228844 A
- WO 2016012263 A